(19) Europäisches Patentamt
European Patent Office
Office européen des brevets

(11) EP 2 270 392 A1

(12) **EUROPÄISCHE PATENTANMELDUNG**

(43) Veröffentlichungstag:
**05.01.2011 Patentblatt 2011/01**

(51) Int Cl.:
***F21V 7/22*** *(2006.01)* ***G02B 1/10*** *(2006.01)*
***G02B 5/08*** *(2006.01)* ***C03C 17/36*** *(2006.01)*

(21) Anmeldenummer: **10005436.0**

(22) Anmeldetag: **26.05.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **26.06.2009 DE 102009030810**

(71) Anmelder: **BlueTec GmbH & Co. KG**
**34388 Trendelburg (DE)**

(72) Erfinder: **Die Erfindernennung liegt noch nicht vor**

(74) Vertreter: **Reinhardt, Thomas Johannes**
**Patentanwaltskanzlei**
**Reinhardt**
**WilhelmshöherAllee 23**
**34117 Kassel (DE)**

(54) **Beschichtung für einen optischen Reflektor**

(57) Die Erfindung betrifft eine Beschichtung für einen optischen Reflektor (10), enthaltend einen Reflektorkörper (12) mit folgendem Schichtaufbau:
a) zuunterst das Substrat (12) oder der Reflektorkörper,
b) darüber eine Vorbehandlungsschicht (13), die auf dem Reflektorkörper aufgebracht ist oder oberflächlich aus dem Reflektorkörper selbst gebildet ist,
c) darauf aufgebracht eine funktionelle, unter anderem der Glättung der Oberfläche dienende Beschichtung (14),
c) darüber eine reflektierende Schicht (15),
d) darüber eine Schutzschicht (20), die der Umgebung ausgesetzt ist, und Siliziumoxid enthält.

Um für bessere Schmutzabweisende Eigenschaften zu sorgen, wird vorgeschlagen, dass die Schutzschicht eine Zusammensetzung gemäß der Formel SiOyCzHa besitzt, worin 1<=y<=2; 0<z<=2 und 0<=a<=1 gilt.

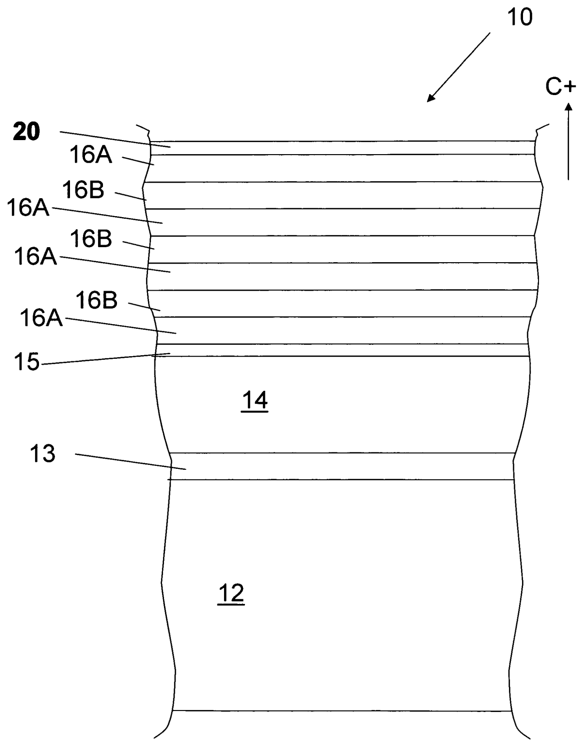


FIG. 2

EP 2 270 392 A1

**Beschreibung**

Stand der Technik

Die vorliegende Erfindung betrifft abrasionsresistente optische Reflektoren nach dem Oberbegriff des Anspruchs 1. Optische Reflektoren werden in zahlreichen Anwendungen verwendet, beispielsweise in der Lichttechnik, bei Scheinwerfern und Leuchten aber auch bei Sonnenkollektoren und solarthermischen Kraftwerken, Photovoltaikmodulen sowie bei diversen anderen Anwendungen und Gegenständen wo Spiegelflächen, Konzentratoren oder Diffusoren benötigt werden.

Einführung zu dünnen Deckschichten:

In den jüngsten Jahren sind polymerische Materialien als aussichtsreiche Kandidaten für elektronische und optische Geräte untersucht worden [ 1, 2 ]. Das Beschichten optischer und elektronischer Materialien mit SiO2 wurde beispielsweise für mikroelektronische Anwendungen angewendet. Tetraethoxysilan (TEOS) und Hexamethyldisiloxan (HMDSO) sind gewöhnliche siliziumorganische Ausgangsstoffe, um polymerisierte SiOx-Dünnschichten abzulagern [ 3, 4 ].

Schutzbeschichtungen mit großer Hydrophobie und thermischer Widerstandskraft sind basierend auf Si- und O-enthaltenden DLC (a-C:H:Si:O)-Beschichtungen, verwendet worden. Diese DLC-Beschichtungen können mit einem RF-PECVD-Prozess bei geringer Temperatur selbst auf transparenten, polymerischen Substraten abgelagert werden [ 5 ].

HMDSO-Beschichtungen können auf Metalloberflächen als Korrosionsschutzschichten verwendet werden [ 6, 7 ]. Zerkratzungsresistente Beschichtungen erfordern eine große Härte und eine gute Adhäsion am Substrat. Die Reduzierung des Kohlenwasserstoffgehaltes und der Prozessbetrieb in einer Atmosphäre mit hohem 02-Gehalt fördern die Bildung von SiO2-ähnlichen Beschichtungen [ 4, 7, 8 ].

Plasmapolymerisierte Schichten aus HMDSO werden in vielen unterschiedlichen Anwendungen verwendet, bei denen SiO2-ähnliche Schichten elektronische, optische, barriere- und mechanische Eigenschaften der Oberflächen, abhängig von der Leistung, der Gaszusammensetzung und anderen angewendeten Prozessparametern verändern. Plasmapolymerisierte Schichten aus HMDSO reduzieren bekanntlicherweise die freie Oberflächenenergie und die Permeationsrate von Wasserdampf. Solche Schichten erfordern eine Pakkungsdichte und eine geringere Gasdurchlässigkeit. Plasmapolymerisierte Schichten sind auch in Vielschichtbeschichtungen mit hoher Barriere verwendet worden, wo sie als glatte und weiche Zwischenschicht zwischen zwei harten anorganischen, oxidischen Barriereschichten dienen. Der Effekt von verbesserten Barriereeigenschaften dieses Vielschichtkonzeptes ist auf eine vergrößerte Länge des Diffusionspfades für Gase zurückzuführen [ 9, 10, 11, 12 ]. Die Benetzungseigenschaften von plasmapolymerisierten SiOx-Dünnschichten (pp-SiOx) wurden als abhängend von dem Anteil des Monomers HMDSO in einer 02-HMDSO-Gasmischung herausgefunden. Die am meisten hydrophoben Eigenschaften beziehen sich auf einen relativen Kohlenstoffgehalt von etwa 50 at% entsprechend Wasserkontaktwinkeln von 110° [ 4 ].

Die Kondensierung von Wasser auf optischen Reflektorbändern findet beispielsweise in den Morgenstunden statt und fördert die Korrosion des Reflektorbandes. Daher ist ein hydrophobes Oberflächenfinish dieser beschichteten Reflektoren wünschenswert, um die Benetzung zu reduzieren und um Korrosion zu verhindern. Plasmapolymerisierte SiOx-Dünnschichten sind gute Kandidaten für eine solche Anwendung.

Im Vergleich zu der für häufig für Großflächenablagerungen verwendeten Technologie der physikalschen Dampfabscheidung (Physical Vapor Deposition, PVD) bringt die Technologie der plasmaverstärkten chemischen Dampfabscheidung (Plasma Enhanced Chemical Vapor Deposition, PECVD) mehrere Vorteile. Es gibt eine niedrigere thermische Substratbelastung, die während der Ablagerung auf das Substrat aufgebracht wird, und es können größere Ablagerungsraten im Vergleich zum Magnetron-Sputtern erreicht werden. Darüber hinaus kann eine niedrigere innere Reibung und eine geringere Härte der abgelagerten PECVD-Schichten vorteilhaft sein zusammen mit relativ dicken Schichten.

Der Magnetron-PECVD-Prozess stellt eine gut skalierbare Technologie für Großflächenanwendungen dar im Vergleich zu anderen PECVD-Technologien, die kapazitiv gekoppelte mittlere Frequenz (mf)-, Radiofrequenz (rf)-erzeugte Plasmen oder mikrowellenerregte Plasmen verwenden. Hier wird für die Erregung des Plasmas eine Magnetron-Sputter-Quelle verwendet.

Nachteile des Standes der Technik

Es ist allgemein bekannt, dass Bänder in sogenannten Glänzwerkstoffen, zum Beispiel Reinst-Aluminium oder Aluminiummagnesium-Legierungen auf Basis von Aluminium mit einem Reinheitsgrad von 99,8 Prozent und größer wie zum Beispiel 99,9 Prozent und Walzoberflächen, die diffuse oder gerichtete Lichtreflexion erzeugen, je nach Anwendung herzustellen. Es ist auch bekannt, zur Erhöhung der gerichteten Reflexion (Glanzgrad)die Oberflächen von solchen Bändern chemisch oder elektrolytisch zu glänzen und anschließend durch anodische Oxidation eine Schutzschicht von einigen Mikrometern Schichtdicke zu erzeugen.

Die bekannten Verfahren haben den Nachteil, dass hochreine und teure Glänzlegierungen auf Basis von Reinstaluminium eingesetzt werden müssen. Durch die anodische Oxidschicht sinkt der Reflexionsgrad der Oberfläche und dabei sowohl die Gesamtreflexion, wie auch die gerichtete Reflexion, durch Absorption und diffuse Lichtstreuung, insbesondere in der Oxidschicht. Dies bedeutet einen Energieverlust.

Aus der EPA-A-0 495 755 sind Gegenstände mit Oberflächen aus Aluminium bekannt geworden, welche geeignet für die Abscheidung von Schichtsystemen aus der Gasphase auf diesen Oberflächen. Auf eine Anodisierung der Oberflächen wird verzichtet, und es wird ein Schichtsystem aus beispielsweise einer Haftschicht, wie einer Keramikschicht, einer Lichtreflexionsschicht, wie einer metallischen Schicht, zum Beispiel aus Aluminium, und einer oder mehreren transparenten Schutzschichten aus beispielsweise den Oxiden, Nitriden oder Fluoriden des Magnesiums, des Titans oder des Praesodyms beschrieben. Solche Schichtsysteme weisen einen hohen Reflexionsgrad auf. Ein derartiges Schichtsystem hat jedoch den Nachteil, dass die Oberfläche sehr empfindlich auf mechanischen Einfluss ist.

Aus der BE-A-1 007 299 ist ein Reflektor mit folgendem Aufbau bekannt:

> Eine Außenschicht aus Acrylharz mit bestimmten Abrasionswiderstand, eine Kunststoffkernschicht und eine die Strahlung reflektierende Schicht. Gegebenenfalls kann unter der reflektierenden Schicht eine druckempfindliche Klebstoffschicht und eine flache Trägerplatte vorgesehen sein.

Nachteil all dieser Schichten ist, dass diese Schichten und Schichtaufbauten im Wesentlichen empfindlich sind gegenüber äußeren, mechanischen Einwirkungen, insbesondere besitzen sie eine sehr niedrige Wischbeständigkeit.

Um die Wischbeständigkeit und damit die Empfindlichkeit der Reflektorschicht gegenüber mechanischen Einwirkungen zu verbessern schlägt die EP 1,129,318 B1 vor, einen Schichtaufbau für einen Reflektor wie folgt zu bilden.

Figur 1 illustriert diesen Schichtaufbau 10 für einen Reflektor:

> Zuunterst ist ein Substrat 12 oder auch Reflektorkörper 12 genannt, angeordnet, darüber eine Vorbehandlungsschicht 13 die auf dem Reflektorkörper aufgebracht ist oder oberflächlich aus dem Reflektorkörper selbst gebildet ist,
>
> darauf aufgebracht eine funktionelle Beschichtung 14, die der Glättung der Schichtoberfläche dient und für eine perfekte gerichtete Reflexion sorgt.
>
> Darauf aufgebracht ist die Reflexionsschichtenfolge, die eine reflektierende Schicht 15 aufweist und mehrere transparente Schichten 16A und 16B enthält, und
>
> darauf aufgebracht eine Schutzschicht 18, die der Umgebung ausgesetzt ist, und aus Siliziumdioxid oder Aluminiumoxid besteht, und die im Wischtest nach DIN 58196 nach 52 Testzyklen mit jeweils 100 Wischschüben keine Beschädigung der Oberfläche zeigt.
>
> Die funktionelle Beschichtung 14 ist entweder ein Siliziumdioxid-Film, der nach einem Sol-Gelverfahren aufgetragen worden ist oder im Falle eines Reflektorkörpers aus Aluminium, ist die funktionelle Beschichtung auch eine durch anodische Oxidation gebildete Aluminiumoxidschicht,

Die Reflexionsschichtenfolgen besteht aus einer metallischen reflektierenden Schicht 15, darauf angeordnet 1, 2, ..... bis 10 transparente Schichten der optischen Dicke $\lambda/2$ +- 40 Nanometer, wobei die transparenten Schichten Doppelschichten aus jeweils zwei Schichten 16A, 16B einer Dicke von etwa $\lambda/4$ sind (Tandemschichten).

Die Schutzschicht 18 ist gebildet in Form einer Schicht aus einem Siliziumoxid der allgemeinem Formel $SiO_x$, wobei x eine Zahl von 1,1 bis 2,0 ist oder einem Aluminiumoxid, und besitzt eine Dicke von 3 Nanometern oder größer.

Die Schutzschicht 18 ist als an der Oberfläche liegende Schicht ausgebildet, die die darunter liegenden Schichten gegen mechanische Beschädigungen schützt.

Der Nachteil eines solches reflektierenden Schichtaufbaus besteht im komplizierten Aufbau und darin, dass die Reflektoren relativ schmutzempfindlich sind.

Die Aufgabe der vorliegenden Erfindung besteht daher darin, einen qualitativ hochwertigen reflektierenden Schichtaufbau zu erzeugen, der robust und sicher verarbeitet werden kann und der eine schmutzabweisende, gleichzeitig aber auch eine korrosionsschützende und abrasionsfeste Oberfläche aufweist, ohne auf mikrometerdicke Beschichtungen wie beispielsweise aus einem nasschemischen Anodisierungsvorgang angewiesen zu sein.

<u>Kurzzusammenfassung und Vorteile der Erfindung</u>

Diese Aufgabe wird mit einer Beschichtung für einen optischen Reflektor und einer besonderen Schutzschicht gemäß des Kennzeichens von Anspruch 1 gelöst.

Die Erfindung betrifft eine Beschichtung für einen optischen Reflektor (10), enthaltend einen Reflektorkörper (12) mit folgendem Schichtaufbau:

> a) zuunterst das Substrat (12) oder der Reflektorkörper,
>
> b) darüber eine Vorbehandlungsschicht (13), die auf dem Reflektorkörper aufgebracht ist oder oberflächlich aus dem Reflektorkörper selbst gebildet ist,
>
> c) darauf aufgebracht eine funktionelle, unter anderem der Glättung der Oberfläche dienende Beschichtung (14),
>
> c) darüber eine reflektierende Schicht (15),
>
> d) darüber eine Schutzschicht (20), die der Umgebung ausgesetzt ist, und Siliziumoxid enthält.

Um für bessere Schmutzabweisende Eigenschaften zu sorgen, wird vorgeschlagen, dass die Schutzschicht eine Zusammensetzung gemäß der Formel $SiO_yC_zH_a$ besitzt, worin 1<=y<=2; 0<z<=2 und 0<=a<=1 gilt.

Die Unteransprüche betreffen bevorzugte Ausführungsformen der erfindungsgemäßen Beschichtung.

In vorteilhafter Weise ist / sind auf der funktionellen Schicht (14) mit oder ohne zwischenliegende Haftschicht eine oder mehrere transparente Schichten (16A, 16B) mit abwechselnd höherem und niedrigerem Brechungsindex aufgebracht. Diese sogenannten Tandemschichten, beispielsweise aus einer Schicht aus Siliziumdioxid mit einer typischen Schichtdicke von 100 nm und einer Schicht aus Titandioxid mit einer typischen Schichtdicke von 50 nm wirken durch konstruktive Interferenz noch reflexionserhöhend.

Anstelle der mehreren transparenten Schichten 16A, 16B kann auch eine andere Schicht hergestellt werden, die gleichartig wirkt, nämlich im wesentlichen als Korrosionsschutz:

> Alternativ oder in Kombination damit kann auf der funktionellen Schicht (14) mit oder ohne zwischen liegende Haftschicht eine Lackschicht, oder / und eine anodisierte schicht oder/ und eine transparente Beschichtung aus einem dielektrischen Material aufgebracht sein.

Die Dicke der Schutzschicht (20) ist zweckmäßiger Weise größer oder gleich zwei Nanometer und kleiner als 50 Nanometer.

Bevorzugt ist die Dicke der Schutzschicht (20) größer oder gleich zwei Nanometer und kleiner oder gleich 10 nm.

In vorteilhafter Weise ist die funktionelle Schicht (14) basierend auf Siliziumoxid in einer ähnlichen Zusammensetzung wie die Schutzschicht (20) ausgebildet.

Nahe der Oberfläche der Schutzschicht (20) ist der Anteil des Kohlenstoffs größer als der Anteil des Sauerstoffs.

Ein Reflektor und / oder ein Reflektorbauteil enthaltend eine solche Beschichtung profitiert von den oben genannten Vorteilen, da der Schichtaufbau von unten nach oben gesehen abrasionsfeste Schichten, korrosionsschützende Schichten und schmutzabweisende Schichten trägt.

Die im Vergleich mit dem der Erfindung am nächsten kommenden bekannten Stand der Technik zusätzliche Anwesenheit von Kohlenstoff in der siliziumoxidischen Schicht ist von Bedeutung für eine mögliche wasserabweisende (hydrophobe) Schutzschicht, was es ermöglicht, die angestrebte schmutzabweisende Wirkung zu erzielen, wie dies nachfolgend im Detail noch erörtert wird.

Im Zusammenhang mit der vorliegenden Erfindung ist auch ein Verfahren zur Herstellung der Beschichtung, bei dem die einzelnen Schichten in einem PVD-Prozeß, einem CVD-Prozeß oder einer Kombination aus beiden Prozessen auf dem Substrat abgeschieden werden, beschrieben.

Die Schutzschicht der erfindungsgemäßen Beschichtung für einen optischen Reflektor dient zum einen dazu, den Wirkungsgrad des Reflektors hoch zu halten und zum anderen jedoch dazu, die Oberfläche der Reflektorschicht in der Weise zu modifizieren, dass sie schmutzabweisend und korrosionsbeständig sowie abrasionsresistent ausgestaltet ist und gegebenenfalls ohne Weiteres nach üblichen Methoden gereinigt werden kann.

Gemäß einem Aspekt der Erfindung entspricht die Zusammensetzung der Schutzschicht SiOyCzHa, worin 1<y<=2; 0<z<=2 und 0<=a<=1 bedeuten.

Die vorliegende Erfindung offenbart unter anderem einen Plasmaprozess und Eigenschaften von polymerisierten SiOx-Schichten, die aus HMDSO durch einen Magnetron-PECVD-Prozess abgelagert wurden.

In einer Variation enthält die Schutzschicht Silizium, Sauerstoff und einen bedeutenden Kohlenstoffanteil.

In einer besonderen Ausführung kann die Beschichtung auch genutzt werden, um die im oben genannten Patent EP 1 129 318 B1 beschriebene Funktionsschicht 14 und gegebenenfalls den Haftgrund 13 zu bilden, ohne nasschemisch hergestellt werden zu müssen. Stattdessen wird/werden sie mit derselben Apparatur in dem Magnetron-PECVD Prozess als siliciumoxidische Schicht hergestellt, beispielsweise mit oder ohne (stöchiometrisches SiO2) Kohlenstoffanteil. Sie ist eine multifunktionale Funktionsschicht, und dient neben der Glättung der Oberfläche auch als Diffusionsbarriere, als Korrosionsschutz und als guter Haftgrund.

Die Beschichtung kann in Ihrer Gesamtheit mit Hilfe von umweltfreundlichen und emissionsfreien physikalischen oder chemischen Dampfabscheideverfahren (PVD/CVD-Verfahren)oder eine Kombination daraus in einem Durchlaufverfahren kostengünstig hergestellt werden.

Zeichnungen

Anhand der Zeichnungen werden Ausführungsbeispiele der Erfindung erläutert.

Es zeigen

Fig. 1 einen schematisch gezeichneten Schichtaufbau für einen Reflektor gemäß Stand der Technik;

Fig. 2 einen schematisch gezeichneten Schichtaufbau für einen Reflektor gemäß Ausführungsbeispiel der Er- findung; Figur 3 veranschaulicht die dynamische Ablagerungs- rate des Magnetron-PECVD-Prozesses für pp-SiOx-Dünnschichten, die auf Floatglas abgelagert wurden.

Figur 4 veranschaulicht die optischen Eigenschaften von po- lymerisierten SiOx-Dünnschichten, die auf Floatglas abgelagert wurden.

Figur 5 veranschaulicht den Wasserkontaktwinkel von polyme- risierten SiOx-Dünnschichten, die auf Floatglas ab- gelagert wurden.

Figur 6 veranschaulicht die Ablagerungsrate und den Wasser- kontaktwinkel als eine Funktion des in den Magnetron-PECVD-Prozess hinzugefügten Sauerstoffs bei einer Plasmaleistung von 60 kW und 127 sccm HMDSO-Monomerfluss.

Figur 7 veranschaulicht den Brechungsindex und den Absorp- tionskoeffizienten als eine Funktion des in den Magnetron-PECVD-Prozess hinzugefügten Sauerstoffs bei einer Plasmaleistung von 60 kW und 127 sccm HMDSO-Monomerfluss.

Beschreibung von Ausführungsbeispielen

In den Figuren bezeichnen gleiche Bezugszeichen gleiche oder funktionsgleiche Komponenten.

Figur 2 entspricht dem Schichtaufbau der Figur 1 bis auf eine modifizierte Deckschicht 20, die als atmosphärische Schutzschicht dient und eine modifizierte Funktionsschicht 14, die unter anderem als Diffusionsbarriere und Korrosionsschutzschicht dient, sowie eine Glättungsfunktion auf die folgenden Schichten ausübt. Die Schutzschicht 20 und die Funktionsschicht 14 besitzen eine Zusammensetzung gemäß der Formel $SiO_y$-$C_zH_a$, worin

$$1<=y<=2;$$

$$0<z<=2$$

und

$$0<=a<=1$$

gilt.

Die Schutzschicht 20 insbesondere kann insbesondere herstellungsbedingt einen Gradienten aufweisen, so dass der Anteil an Kohlenstoff zur Oberfläche hin zunimmt, s. Pfeil "C+" in der Figur 2. Im besonderen kann der Gradient auch nicht ausgeprägt vorhanden sein und die Schutzschicht harte Übergänge in ihrer Zusammensetzung aufweisen. Bevorzugt ist ein relativ großer Anteil von Kohlenstoff nahe der Oberfläche, um die hydrophobische Eigenschaft zu erzielen. Die Dicke der Schutzschicht 20 beträgt mindestens 2 Nanometer.

Am Übergang zur obersten Schicht 16B beträgt der den Kohlenstoff charakterisierende Parameter z beispielsweise circa 0,1. Zur Schichtmitte der Schicht 20 hin beträgt z dann etwa 0,4, und zur Oberfläche hin beträgt z etwa 1,2 bis 1,8 und der Parameter y für Sauerstoff beträgt in diesem oberflächennahen Randbereich entsprechend weniger, also 0,8 bis 0,2.

Die Dicke der Funktionsschicht 14 beträgt mindestens 10 nm bis 500 nm, vorzugsweise 100 nm. Ein gradientenartiger Aufbau ist hier nicht unbedingt zweckdienlich.

Die Schichtdicken sind nicht proportional gezeichnet.

Zweites Ausführungsbeispiel:

Kurzzusammenfassung des zweiten Ausführungsbeispiels:

Gemäß diesem Ausführungsbeispiel sind vorteilhafte Oberflächeneigenschaften von plasmapolimerisierten Schichten offenbart, die aus Hexamethyldisiloxan (HMDSO) durch einen magnetronbasierten plasmaverstärkten chemischen Dampfabscheideprozess (PECVD) abgelagert wurden. Eine Katodeneinrichtung vom Stand der Technik wird als Plasmaquelle verwendet. Die optischen Eigenschaften, Abscheidungsrate und

die Schichtzusammensetzung von diesen plasmopolymerisierten Schichten werden im besonderen im Bezug auf deren Anwendung als Deckschicht auf optischen Reflektoren ausgewertet, um die Korrosionsbeständigkeit der Reflektoren zu verstärken.

Einführung in das zweite Ausführungsbeispiel:

Die Versuche werden unter Verwendung eines Batch-Beschichters vom Stand der Technik durchgeführt. Ein Silizium-Aluminium-Target wird für den Magnetron-assistierten PECVD-Prozess in einer Atmosphäre einer Ar-HMDSO-Mischung verwendet. Für manche der Versuche wird 02 der Atmosphäre hinzugefügt, wobei das Verhältnis der Massenflüsse von 02 gegen HMDSO zwischen 0 und 2,8 variiert wird. Ein gesteuerter Verdampfermischer (CEM) wird in Kombination mit einem Flüssigkeitsmassen-Plus-Steuergerät Liqui-Flow (beide Bronkhorst) verwendet, um das HMDSO-Monomer zu verdampfen und um seinen Dampffluss zu steuern [ 14, 15 ]. Die Temperatur des Verdampfers ist auf 60° C für alle Versuche eingestellt.

Der Gesamtdruck ist auf 1 Pa bei einer Plasmaleistung von 5 kW bzw. 20 kW und auf 1,5 Pa zusammen mit einer Plasmaleistung von 60 kW eingestellt.

Grundsätzlich können gemäß der Erfindung die Beschichtungsgerätschaften und die Geräteeinstellungen, wie sie im Beschichtungsprozess als auch bei der Zusammensetzung der Deckschicht verwendet werden, wie im Stand der Technik zum Beschichten von Solarabsorbern verwendet werden.

Dünnschichten von polymerisiertem SiOx wurden auf Standard-Floatglas-Substraten mit einer Dicke von 3 mm und auch auf Aluminium-Flachmaterial abgeschieden.

Die Schichtdicke wurde unter Verwendung eines DEKTAK 3-Profilometers (Veeco) bestimmt. Die Spektren der optischen Transmission und der Reflektion der zubereiteten Schichten wurden unter Verwendung eines Lambda 19-UV/VIS/NIR-Fotospektrometers (Perkin Elmer) gemessen. Daraus wurden optische Eigenschaften (Brechungsindex und Absorptionskoeffizient) der auf die Floatglas-Substrate abgeschiedenen Dünnschichten berechnet. Reflektionsspektren der Dünnschichten, die auf Ag-beschichteten Glassubstraten in dem Infrarotspektralbereich abgelagert wurden, wurden unter Verwendung eines Lambda 2000-IR-Fotospektrometers (Perkin Elmer) gemessen. Die IR-Peak-Integrale von ausgewählten Peaks werden numerisch berechnet und bezogen auf verschiedene Bindungskonfigurationen des polymerisierten Monomers.

Der Wasserkontaktwinkel wird als ein Maß für die Oberflächenenergie unter Verwendung eines OSA 20-Kontaktwinkel-Messsystems (Data Physics) gemessen. Die Haltbarkeit der abgelagerten Beschichtungen wurde nach Durchführung eines Salz-Dampf-/Salz-Wasser-Tests untersucht, wobei Proben der beschichteten Reflektoren dem Dampf von kochendem Salzwasser mit einer Konzentration von 3 Gewichtsprozent NaCl ausgesetzt und dorthinein getunkt wurden. Vor und nach Exposition während vier Stunden wurden der Kontaktwinkel, das Reflektionsvermögen im sichtbaren und im nahen Infrarotspektralbereich gemessen.

Ergebnisse des zweiten Ausführungsbeispiels:

In der ersten Versuchsreihe wurde die Variation der dynamischen Ablagerungsrate mit dem Monomerfluss bei drei verschiedenen Leistungsstufen ausgewertet. Die Ablagerungsrate wird aus den gemessenen Schichtdicken der bei einer gegebenen Substratbewegungsgeschwindigkeit abgelagerten Dünnschichten gemessen. Sie wurde als proportional zur Plasmaleistung und zum Monomerfluss (Figur 3) herausgefunden. Mit zunehmendem Betrag von HMDSO nimmt jedoch die Dichte von Lichtbogenbildung (arcing) zu. Der Prozess verändert sich zu permanenter Lichtbogenbildung, wenn der HMDSO-Fluss 110 sccm bei 5 kW Plasmaleistung und 65 sccm bei 20 kW Plasmaleistung erreicht. Eine weitere Zunahme des HMDSO-Flusses erzeugt einen instabilen PECVD-Prozess mit permanenter Lichtbogenbildung. Bei einer Plasmaleistung von 60 kW ist kein stabiler Prozess in einer Ar/HMDSO-Atomosphäre möglich. Durch Hinzufügen von 02 zu der Gasatmosphäre kann der PECVD-Prozess für eine Plasmaleistung von 60 kW stabilisiert werden. Eine maximale Ablagerungsrate des Magnetron-PECVD-Prozesses von 200 nm x m/min wird erhalten bei einer Plasmaleistung von 60 kW und 212 sccm HMDSO, bei 2 Pa Gesamtdruck und unter Hinzufügen von 250 sccm 02 zur Atmosphäre.

Die Dickengleichmäßigkeit des Magnetron-PECVD-Prozesses stellt sich als besser als +- 3 % über einen zweiten Bereich der Schichtdicke dar.

Schichteigenschaften

Innerhalb der folgenden Versuchsreihen wurden die optischen Eigenschaften, der Wasserkontaktwinkel und die Wirkung von zusätzlichem Sauerstoff in dem Plasma hinsichtlich der Dünnschichteigenschaften untersucht. Figur 4 zeigt den Brechungsindex und Absorptionskoeffizienten für Dünnschichten, die bei einer Plasmaleistung von 5 kW, 20 kW und 60 kW abgeschieden wurden. Der niedrigste Brechungsindex und die niedrigste Absorption wurden bei einer Plasmaleistung von 5 kW erreicht. Der Brechungsindex reicht von 1,58 bis 1,70 und der Absorptionskoeffizient reicht von 8 x $10^{-5}$ bis 5 x $10^{-3}$.

Für HMDSO-Flüsse, die kleiner sind als 85 sccm, zeigen die Schichten Lichtabsorption. Bei einer Plasmaleistung von 20 kW reicht der Brechungsindex der Schichten von 1,7 bis 2,06. Der Absorptionskoeffizient wird mit 7 x $10^{-3}$ gefunden für HMDSO-Flüsse, die größer sind als 40 sccm. Für HMDSO-Flüsse kleiner als 40 sccm werden die Schichten absorbierend. Bei einer Plasmaleistung von 60 kW wurden Dünnschichten in der Gegenwart von zusätzlichem 02 abgelagert, wobei das Verhältnis von Monomerfluss zu reaktivem Gasfluss auf 1 : 1,2 eingestellt ist. Der Absorptionsindex dieser Schichten reicht von 6 x $10^{-3}$ bis 9 x $10^{-3}$. Ihr Brechungsindex reicht von 1,64 bis 1,70.

Die Wasserkontaktwinkel der bei einer Plasmaleistung von 5 kW und 20 kW abgelagerten Schichten ist bestimmt zu 106° und 110°. Der Kontaktwinkel nimmt leicht ab mit zunehmendem Monomergehalt. Die Einführung von 02 in den Magnetron-PECVD-Prozess bewirkt, dass der Kontaktwinkel von 100° auf 98° absinkt (Figur 5).

Die Ablagerungsrate, der Wasserkontaktwinkel und die optischen Eigenschaften der Dünnschichten, die bei einer Plasmaleistung von 60 kW abgeschieden wurden, hängen von der Menge an Sauerstoff in der Prozessgasatmosphäre ab. Mit von 0 sccm bis 300 sccm zunehmendem O2-Fluss steigt die Abscheidungsrate von 125 nm x m/min zu 145 nm x m/min mit einem unveränderten Monomerfluss von 127 sccm HMDSO. Der Wasserkontaktwinkel war fast konstant bei 99° bis 98,5°, während der O2-Fluss von 0 sccm bis 200 sccm gesteigert worden ist. Eine weitere Steigerung des 02-Flusses bewirkt eine Abnahme des Wasserkontaktwinkels auf 95° (Figur 6). Der Brechungsindex zeigt eine fast proportionale Abnahme von 1,86 auf 1,58 mit zunehmendem 02-Fluss. Der Absorptionskoeffizient jedoch zeigt keinerlei lineare Antwort auf die Änderungen in dem O2-Fluss. Es gibt eine minimale Absorption von 6 x $10^{-3}$, die bei einem O2-Fluss von 150 sccm beobachtet wurde (Figur 7).

Zu den Wasserkontaktwinkeln der unbeschichteten und der beschichteten Reflektorbänder:

> Die polymerisierten SiOx-Dünnschichten werden auf Reflektorschichten auf Metallsubstraten abgeschieden, danach findet eine Temperung (Annealing) bei 300° C während acht Stunden statt, danach eine Exposition zu NaCl-Dampf und dann ein Hineintauchen in eine NaCl-Lösung während vier Stunden.

Der Wasserkontaktwinkel der unbeschichteten Proben sinkt von etwa 100° auf etwa 30° nach der Temperung. Nach der Exposition zum NaCl-Dampf und der NaCl-Lösung werden Wasserkontaktwinkel von 53° bis 66° für die nicht beschichteten optischen Reflektorbänder gemessen. Alle beschichteten optischen Reflektorproben zeigen Kontaktwinkel von 90° und mehr nach den NaCl-Tests. Für alle beschichteten Proben war der Unterschied im Wasserkontaktwinkel vor und nach der Temperung geringer als 4° und der hydrophobische Charakter der Oberfläche blieb bestehen.

Interpretation der Ergebnisse des zweiten Ausführungsbeispiels:

> Für den speziellen Zweck der vorliegenden Erfindung wird die Magnetron-PECVD-Technologie beschrieben unter Verwendung von Stand-der-Technik-Kathoden für die Plasmaanregung. Die erfolgreiche Anwendung von Magnetronkatoden größerer Größe beweist die Qualifikation der Einstellungen für Großflächenanwendungen. Der gewöhnliche Sputteringprozess von Siliziumtargets wird zu einem PECVD-Prozess, in dem HMDSO-Monomer zu der Argonatmosphäre hinzugefügt wird. Somit werden plasmapolymerisierte SiOx-Dünnschichten abgeschieden und die Dickengleichmäßigkeit stellt sich auf +- 3 % entlang einer Abscheidungslänge von 125 cm ein.

Der Prozess wird bei drei verschiedenen Plasmaleistungsstufen untersucht. Bei einer niedrigen Plasmaleistung von 5 kW und bei einer mittleren Plasmaleistung von 20 kW läuft der PECVD-Prozess stabil bei niedrigen HMDSO-Flüssen. Die Prozessstörung, die durch Lichtbogenbildung verursacht wird, wird dominant bei zunehmenden Monomerflüssen. Es ist nahe liegend, dass die Dicke der wieder abgeschiedenen Schichten auf dem Sputtertarget mit höheren Monomerkonzentrationen in der Gasatmosphäre größer wird. Diese Rückablagerungen werden auf ihren Oberflächen umso mehr geladen, je höher die Plasmaleistung wird. Lichtbogenbildung ist der bevorzugte Mechanismus, um diese rückabgelagerten Schichten zu entladen. Das Hinzufügen von 02 zu der Plasmaentladung führt zu einer besseren Prozessstabilität und weniger Lichtbogenbildung.

Die Abscheidungsrate des Magnetron-PECVD-Prozesses entspricht der angewendeten Plasmaleistung und dem angewendeten Monomerfluss. Die Abscheidungsrate konnte zwischen 20 nm x m/min bei 5 kW und 200 nm x m/min bei 60 kW Plasmaleistung variiert werden.

Die Eigenschaften der abgeschiedenen Schichten sind hinsichtlich der angelegten Plasmaleistung, dem angewandten Monomerfluss und dem Fluss von zusätzlichem 02 charakterisiert. Der Brechungsindex der abgeschiedenen Schichten aus pp-SiO2 variiert zwischen 1,59 und 2,06. Der Absorptionsindex sämtlicher abgeschiedener Schichten variiert von 8 x $10^{-5}$ bis 3 x $10^{-2}$. Der Wasserkontaktwinkel sämtlicher Proben reichte von 98° bis 110° und bestätigte deren hydrophoben Charakter. Die Schichten mit der niedrigsten Absorption von 8 x $10^{-5}$ und dem geringsten Brechungsindex von 1,58 wurden bei einer Plasmaleistung von 5 kW und einem Monomerfluss von 150 sccm HMDSO abgeschieden. Diese Proben zeigen einen Wasserkontaktwinkel von 106°. Die Schichten mit dem höchsten Brechungsindex von 2,06 und dem beobachteten höchsten Absorptionsindex von 3 x $10^{-2}$ beziehen sich auf eine Plasmaleistung von 20 kW und einen Monomerfluss von 15 sccm HMDSO. Diese Probe zeigt einen Wasserkontaktwinkel von 109°.

Die niedrigsten Wasserkontaktwinkel von 99° +- 1° werden von Schichten gemessen, die bei einer Plasmaleistung von 60 kW und einem Monomerfluss von 127 sccm HMDSO und einem zusätzlichen O2-Fluss von 150 sccm abgeschieden wurden. Die Abscheidungsrate, die optischen Eigenschaften und der Wasserkontaktwinkel hängen von der Menge des zu dem PECVD hinzugefügten 02 ab. Bei einem O2-Fluss von 150 sccm zeigen die Proben, die bei einem Fluss von 127 sccm HMDSO abgeschieden wurden, eine minimale Absorption von 6 x $10^{-3}$. Die Haltbarkeitstests zeigten, dass eine Deckschicht aus plasmapolymerisiertem SiOx den Wasserkontaktwinkel von optischen Reflektorbändern erhöht. Die hydrophoberen Oberflächeneigenschaften reduzieren die Benetzbarkeit und verbessern daher die Korrosionsbeständigkeit der Reflektoren. Während die anfänglichen Wasserkontaktwinkel von 102° +- 2° der unbeschichteten Reflektoren nach irgendeinem der Haltbarkeitstests, das heißt Temperung, NaCl-Dampf- und NaCl-Tauchbad-Tests, verlorengingen, zeigten die überschichteten optischen Reflektoren hydrophobische Oberflächeneigenschaften nach diesen Haltbarkeitstests. Diese Tests dienen nur als Indikatortests. Endgültige Ergebnisse bezüglich der Performance der Haltbarkeitstests gemäß standardisierten Testverfahren für verschiedene klimatische Bedingungen werden genauere Informationen hinsichtlich des Langzeitoberflächenschutzes von optischen Reflektoren zeigen, die mit plasmapolymerisierten SiOx-Schichten aus HMDSO beschichtet sind.

Weiter sei angemerkt, dass auch für das erste Ausführungsbeispiel die Apparatur und die Vorgehensweise aus dem zweiten Ausführungsbeispiel gewählt werden kann.

Obwohl die vorliegende Erfindung anhand von bevorzugten Ausführungsbeispielen vorstehend und weiter oben beschrieben wurde, ist sie darauf nicht beschränkt, sondern auf vielfältige Weise modifizierbar.

Es hat sich als günstig erwiesen, wenn die letzte, hydrophobisierende Schutzschicht eine Schichtdicke besitzt, die kleiner ist als 50 Nanometer, bevorzugt kleiner als 20 Nanometer und immer größer oder gleich zwei Nanometer.

In einer bevorzugten Ausführungsform der erfindungsgemäßen Beschichtung ist die Schutzschicht oder ein Teil davon über der Reflektorschicht als Gradientenschicht ausgebildet, worin die Gehalte an Sauerstoff und Kohlenstoff kontinuierlich oder diskontinuierlich geändert sind. In der Praxis hat es sich als besonders vorteilhaft erwiesen, wenn das lokale Verhältnis von Sauerstoff zu Kohlenstoff zur Oberfläche der Schutzschicht auf Werte von kleiner 1 abnimmt. Auf diese Weise erreicht man eine Hydrophobisierung der Oberfläche der Schutzschicht. Sie wird dadurch zunehmend wasserabweisend und daher schmutzabweisend. Aufgrund der Tatsache, dass die Kohlenstoff enthaltende Schicht jedoch insgesamt relativ dünn ist, wird das Reflexionsverhalten des gesamten Reflektoraufbaus kaum negativ beeinflusst. Falls ein Gradient des Kohlenstoffanteils vorhanden ist, sollte er bevorzugt steil verlaufen

Als Substrat für die erfindungsgemäße Beschichtung kann im Prinzip jedes Substrat verwendet werden, das für optische Reflektoren geeignet ist. Bevorzugt ist das Substrat aus einem Metall oder Metalllegierung, einem Kunststoff oder auch aus Glas bestehend. Auch keramische Substrate kommen in Frage. Bevorzugt ist das Substrat als dünnes Band in Form eines Metallbandes oder Kunststoffbandes hergestellt. Die auf dem Substrat angeordnete Haftschicht - es können auch mehr als eine Haftschicht sein - der erfindungsgemäßen Beschichtung für den optischen Reflektor fördert die Haftung zwischen dem Substrat und der eigentlichen funktionellen Glättungsschicht. Normalerweise ist die Haftschicht eine dünne Schicht aus einem Metalloxinitrit oder/und aus einem Metallnitrit.

Beispiele für ein geeignetes Material für die Haftschicht sind Chromoxinitrit ($CrO_xN_y$) und Titanoxinitrit ($TiO_xN_y$), mit jeweils 0<=x<=2 und 0<=y<=1.

Normalerweise weist die Haftschicht eine Dicke in einem Bereich von 5 bis 200 Nanometern auf. Die Haftschicht ist vorzugsweise auch als Gradientenschicht aufgebaut, wobei ausgehend vom Substrat der metallische Anteil in der Haftschicht erhöht vorliegt.

Die eigentliche Reflektorschicht 15 kann bevorzugt aus reinstem Aluminium bestehen, oder aufgebaut sein, wie in dem oben genannten europäischen Patent EP 1 129 318 B1 beschrieben ist. Die Offenbarung dieser Patentschrift wird per Bezugnahme in die hier vorliegende Patentanmeldung einbezogen.

Die erfindungsgemäße Beschichtung kann nach jedem Verfahren hergestellt werden, mit dem man extrem dünne Schichten im Nanometerbereich erzeugen kann. Üblicherweise werden die einzelnen Schichten in einem PVD-Prozeß (PVD=physical vapor deposition), einem CVD-Verfahren (CVD=chemical vapor deposition) oder eine Kombination aus beiden Prozessen auf dem Substrat abgeschieden.

Zu den PVD-Prozessen zählt das Sputter-Verfahren, das bevorzugt angewendet wird, um die Haftschicht und die Reflektorschicht auf dem Substrat abzuscheiden. Die Schutzschicht kann ganz oder teilweise mit dem Sputter-Verfahren hergestellt werden.

In einer besonderen Ausführungsform des Verfahrens wird die Schutzschicht von einem Siliziumtarget nach dem Stand der Technik in Gegenwart von sauerstoff- und/oder kohlenstoffhaltigen Verbindungen aus der Reflektorschicht durch Sputtern reaktiv abgeschieden. Bevorzugt sind dem Siliziumtarget geringe Mengen von Aluminium beigefügt (<20 Gewichtsprozent), um den elektrischen Leitwert des Tages zu erhöhen.

In einer alternativen Ausführungsform des Verfahrens wird die Schutzschicht durch ein Mikrowellenplasma in einer Durchlaufanlage abgeschieden.

Mit beiden Verfahren ist es möglich, Siliziumoxid und SiOCH-haltige Schichten in Kombination auf der Reflektorschicht abzuscheiden.

Durch Steuerung der Konzentration der im Plasma befindlichen Gase kann die Zusammensetzung der Schutzschicht durch

Bildung einer Gradientenschicht gezielt geändert werden. Beispielsweise wird durch eine Reduktion oder ein Abschalten der Sauerstoffzufuhr bei den Beschichtungsquellen im Durchlaufprozess, die die Deckschicht bilden, eine Hydrophobisierung der Oberfläche der Schutzschicht erreicht. In einer Durchlaufanlage wird dies erreicht, indem bei der letzten Beschichtungsstation im Vergleich zu den vorhergehenden Stationen die Konzentration an Sauerstoff gegenüber anderen kohlenstoffhaltigen Reaktivgasen abgesenkt wird.

Schließlich können die Merkmale der Unteransprüche im wesentlichen frei miteinander und nicht durch die in den Ansprüchen vorliegende Reihenfolge miteinander kombiniert werden, sofern sie unabhängig voneinander sind.

REFERENZEN

1. M. Kakimoto, M. Suzuki, T. Konishi, Y. Imai, M. Iwamoto and T. Hino, "Preparation of mono- and multi-layer films of aromatic polyimides using Langmuir-Blodgett technique", Chemistry Letters, 15 (5), pp. 823-826, 1986.

2. Kubono, H. Higuchi, S. Umemoto and N. Okui, "Molecular orientation of alkyl-aromatic polyimide thin films prepared by vapour deposition polymerization", Thin Solid Films, 229, pp. 133-136, 1993.

3. K. Ebihara, T. Fujishima, D. Kojyo and M. Murata, "Silicon oxide film preparation by RF plasma-enhanced MOCVD using hexamethyldisiloxane", Plasma Sources Science and Technology, 2, pp. 14-17, 1993.

4. D. Hegemann, H. Brunner, C. Oehr, "Improving the Adhesion of Siloxane-Based Plasma Coatings on Poly-mers with Defined Wetting Properties", Proceedings of the 45th Technical Conference of the Society of Vacuum Coaters, pp. 174-178, 2002.

5. C. Corbella, I. Bialuch, M. Kleinschmidt, K. Bewilogua, "Modified DLC coatings prepared in a large-scale reactor by dual microwave/pulsed-DC plasma-activated chemical vapour deposition", Thin Solid Films, 517 (3), pp. 1125-1130, 2008.

6. C. Vautrin-Ul, F. Roux, C. Boisse-Laporte, J.L. Pastol, A. Chausse, "Hexamethyldisiloxane (HMDSO)-plasma-polymerised coatings as primer for iron corrosion protection: influence of RF bias", Journal of Materials Chemistry, 12 (8), pp. 2318-2324, 2002.

7. Pfuch, A. Heft, R. Weidl, K. Lang, "Characterization of SiO2 thin films prepared by plasma-activated chemical vapour deposition", Surface and Coatings Technology, 201, pp. 189-196, 2006

8. S. Sahli, Y. Segui, S. Ramdani and Z. Takkouk, "R.f. plasma deposition from hexamethyldisiloxane-oxygen mixtures", Thin Solid Films, 250, pp. 206-212, 1994

9. J. Fahlteich, W. Schönberger, B. Meyer, M. Fahland, N. Schiller, "Mechanical and barrier properties of thin oxide films on flexible polymer substrates", Proceedings of the 51st Technical Conference of the Society of Vacuum Coaters, pp. 50-55, 2008.

10. J. Fahlteich, M. Fahland, N. Schiller, "Permeation bar-rier properties of oxide layers on polymer film depo-sited by pulsed magnetron sputtering", Proceedings of the 50th Technical Conference of the Society of Vacuum Coaters, pp. 723-727, 2007.

11. Bieder, A. Gruniger, Ph. Rudolf von Rohr, "Deposition of SiOx diffusion barriers on flexible packaging materials by PECVD", Surface and Coatings Technology, 200, pp. 928-931, 2005.

12. Grüniger, A. Bieder, A. Sonnenfeld, Ph. Rudolf von Rohr, U. Müller, R. Hauert, "Influence of film structure and composition on diffusion barrier performance of SiOx thin films deposited by PECVD", Surface and Coatings Technology, 200 (14-15), pp. 4564-4571, 2006.

13. Charton, M. Fahland, and N. Schiller, "Plasma Enhanced CVD Process using a Dual Magnetron as Plas-ma Source," Proceedings of the 48th Technical Conference of the Society of Vacuum Coaters, pp. 623-625, 2005

14. "LIQUI-FLOW ® Massedurchfluss- oder Druckmess- und - regelgerät für Gase und Flüssigkeiten", Benutzer-Handbuch, 9.19.001K, BRONKHORST HIGH-TECH B.V., 2007.

15. "CEM Flüssigkeitsdosiersystem mit geregelter Verdampfung", Benutzer-Handbuch, 9.19.010F, BRONK-HORST HIGH-TECH B.V., 2007.

**Patentansprüche**

**1.** Beschichtung für einen optischen Reflektor (10), enthaltend einen Reflektorkörper (12) mit folgendem Schichtaufbau:

a) zuunterst das Substrat (12) oder der Reflektorkörper,
b) darüber eine Vorbehandlungsschicht (13), die auf dem Reflektorkörper aufgebracht ist oder oberflächlich aus dem Reflektorkörper selbst gebildet ist,
c) darauf aufgebracht eine funktionelle, unter anderem der Glättung der Oberfläche dienende Beschichtung (14),
d) darüber eine reflektierende Schicht (15),
e) darüber eine Schutzschicht (20), die der Umgebung ausgesetzt ist, und Siliziumoxid enthält,
**dadurch gekennzeichnet,**
f) **dass** die Schutzschicht (20) eine Zusammensetzung gemäß der Formel $SiO_yC_zH_a$ besitzt, worin $1<=y<2$; $0<z<=2$ und $0<=a<=1$ gilt.

**2.** Beschichtung nach Anspruch 1, wobei auf der funktionellen Schicht (14) mit oder ohne zwischenliegende Haftschicht eine oder mehrere transparente Schichten (16A, 16B) mit abwechselnd höherem und niedrigerem Brechungsindex aufgebracht ist.

**3.** Beschichtung nach Anspruch 1, wobei auf der funktionellen Schicht (14) mit oder ohne zwischenliegende Haftschicht eine Lackschicht, oder / und eine anodisierte schicht oder/ und eine transparente Beschichtung aus einem dielektrischen Material aufgebracht ist.

**4.** Beschichtung nach einem der vorstehenden Ansprüche, wobei die Dicke der Schutzschicht (20) größer oder gleich zwei Nanometer und kleiner als 50 Nanometer ist.

**5.** Beschichtung nach einem der vorstehenden Ansprüche, wobei die Dicke der Schutzschicht (20) größer oder gleich zwei Nanometer und kleiner oder gleich 10 nm ist.

**6.** Beschichtung nach einem der vorstehenden Ansprüche, wobei die funktionelle Schicht (14) basierend auf Siliziumoxid in einer ähnlichen Zusammensetzung wie die Schutzschicht (20) ausgebildet ist.

**7.** Beschichtung nach einem der vorstehenden Ansprüche, wobei nahe der Oberfläche der Schutzschicht (20) der Anteil des Kohlenstoffs größer ist als der Anteil des Sauerstoffs.

**8.** Metallisches Band, enthaltend eine Beschichtung nach einem der vorstehenden Ansprüche.

**9.** Kunststoffband, enthaltend eine Beschichtung nach einem der vorstehenden Ansprüche.

**10.** Reflektorbauteil enthaltend eine Beschichtung nach einem der vorstehenden Ansprüche 1- 7.

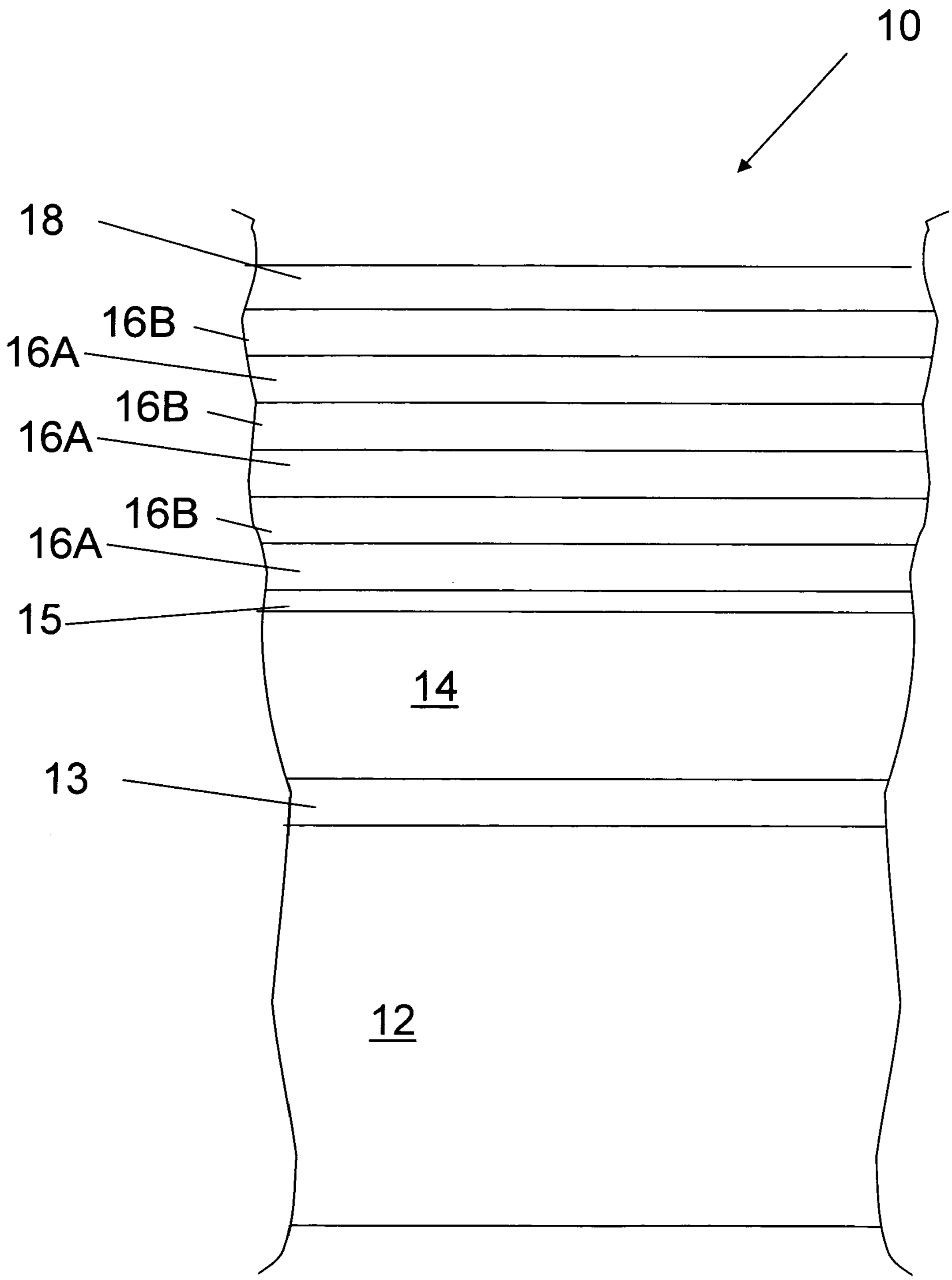


STAND DER TECNIK

FIG. 1

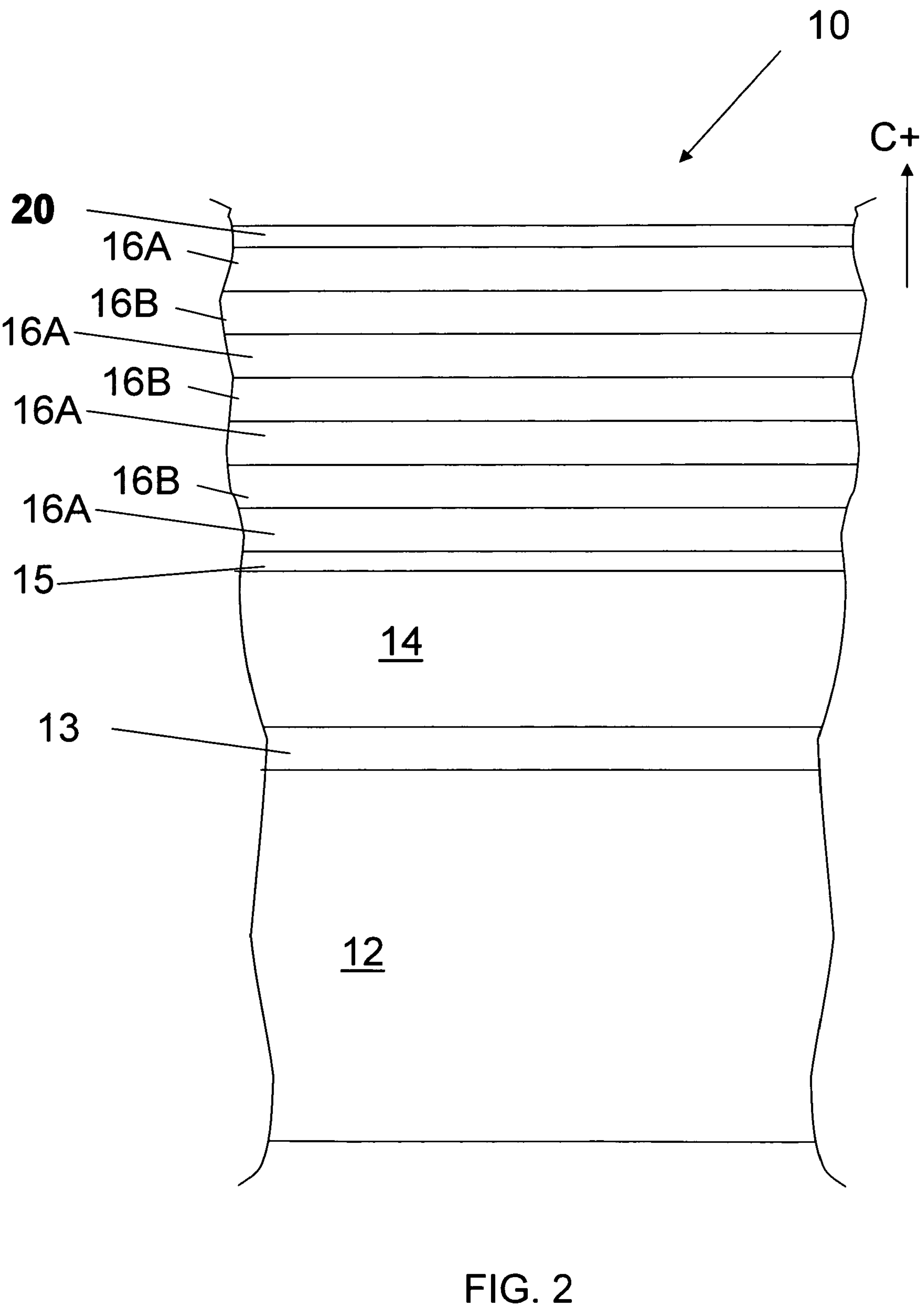


FIG. 2

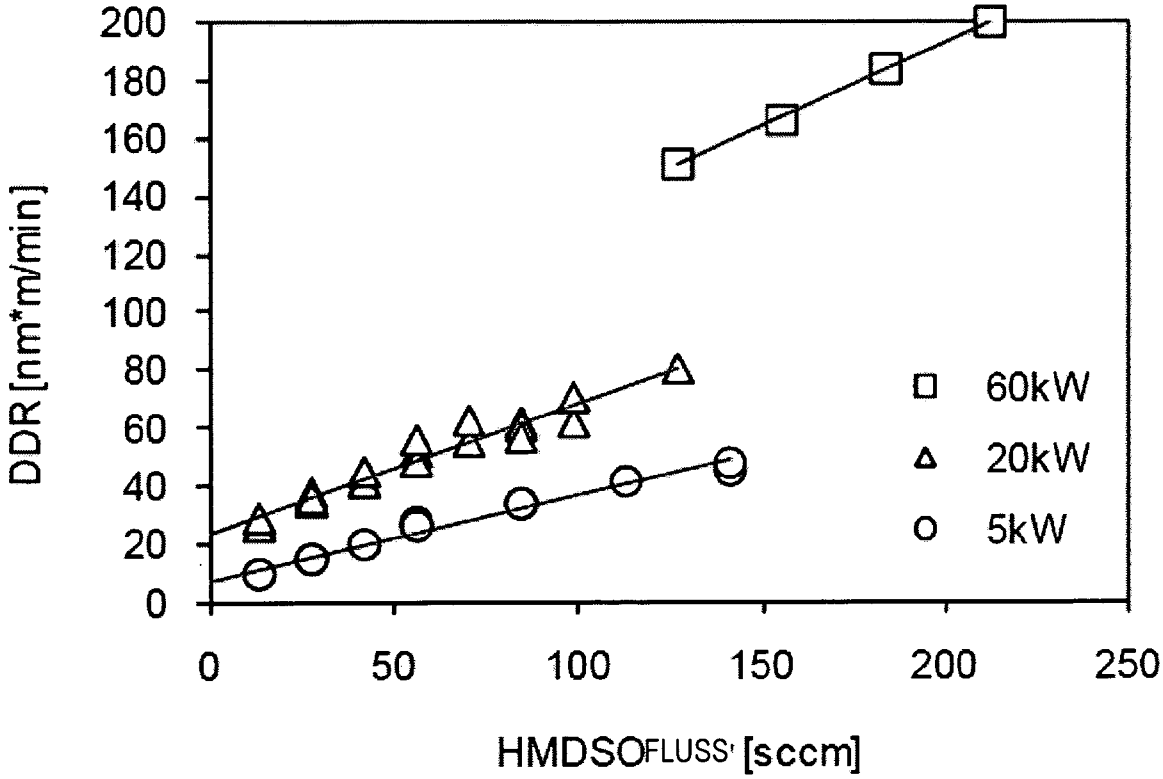
200
180
160
140
120
100
80
60
40
20
0
DDR [nm*m/min]
0
50
100
150
200
250
HMDSOFLUSS' [sccm]
60kW
20kW
5kW

FIG. 3

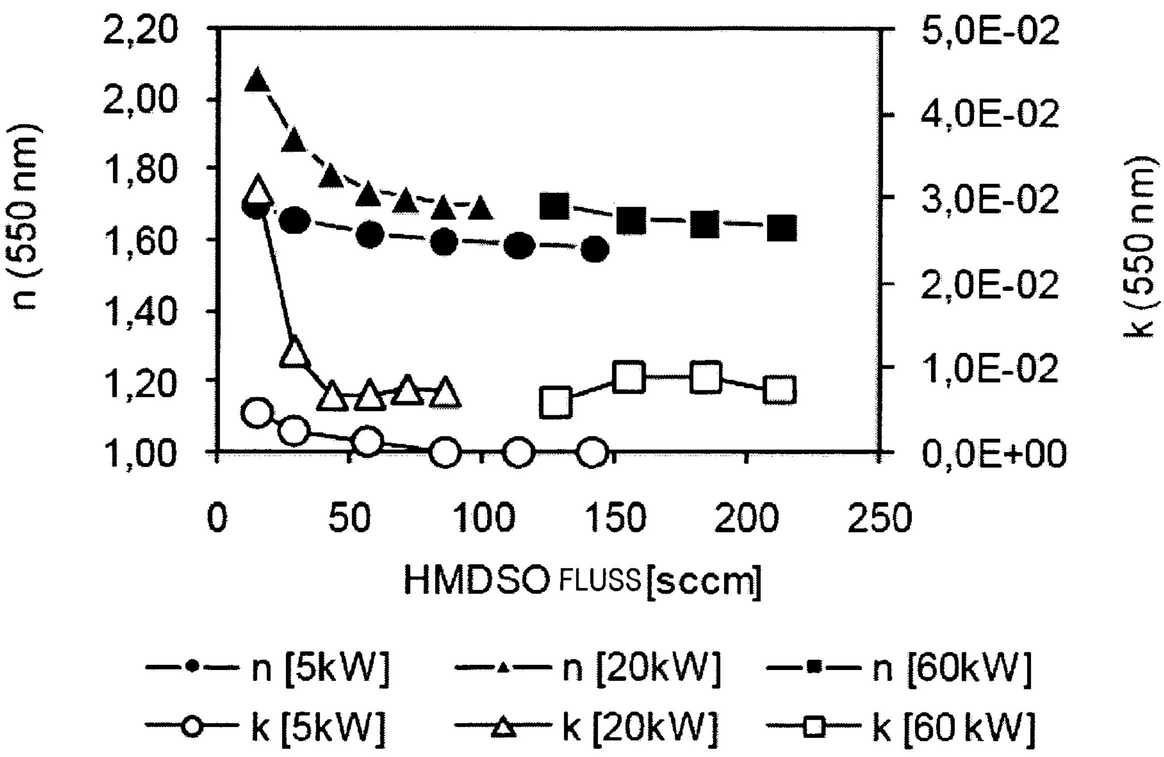
2,20
2,00
1,80
1,60
1,40
1,20
1,00
n (550 nm)
5,0E-02
4,0E-02
3,0E-02
2,0E-02
1,0E-02
0,0E+00
k (550 nm)
0
50
100
150
200
250
HMDSO FLUSS [sccm]
n [5kW]
n [20kW]
n [60kW]
k [5kW]
k [20kW]
k [60 kW]

FIG. 4

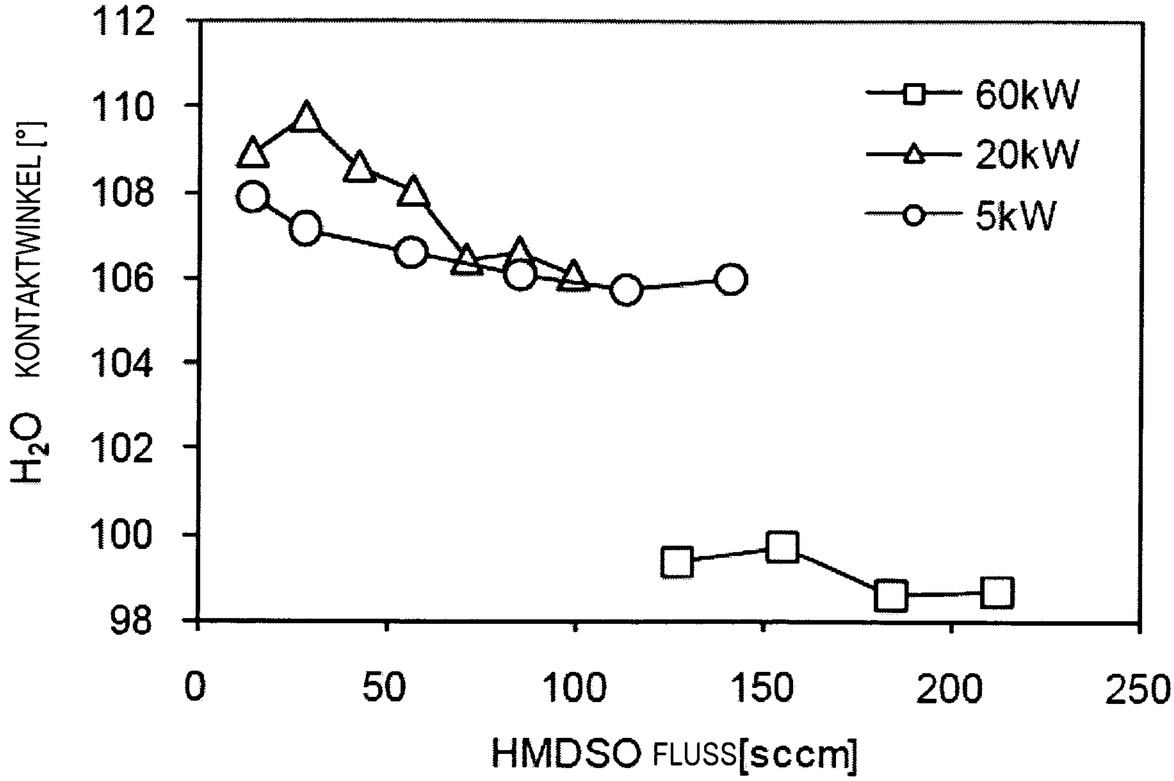
112
110
108
106
104
102
100
98
0
50
100
150
200
250
60kW
20kW
5kW
H2O KONTAKTWINKEL [°]
HMDSO FLUSS[sccm]

FIG. 5

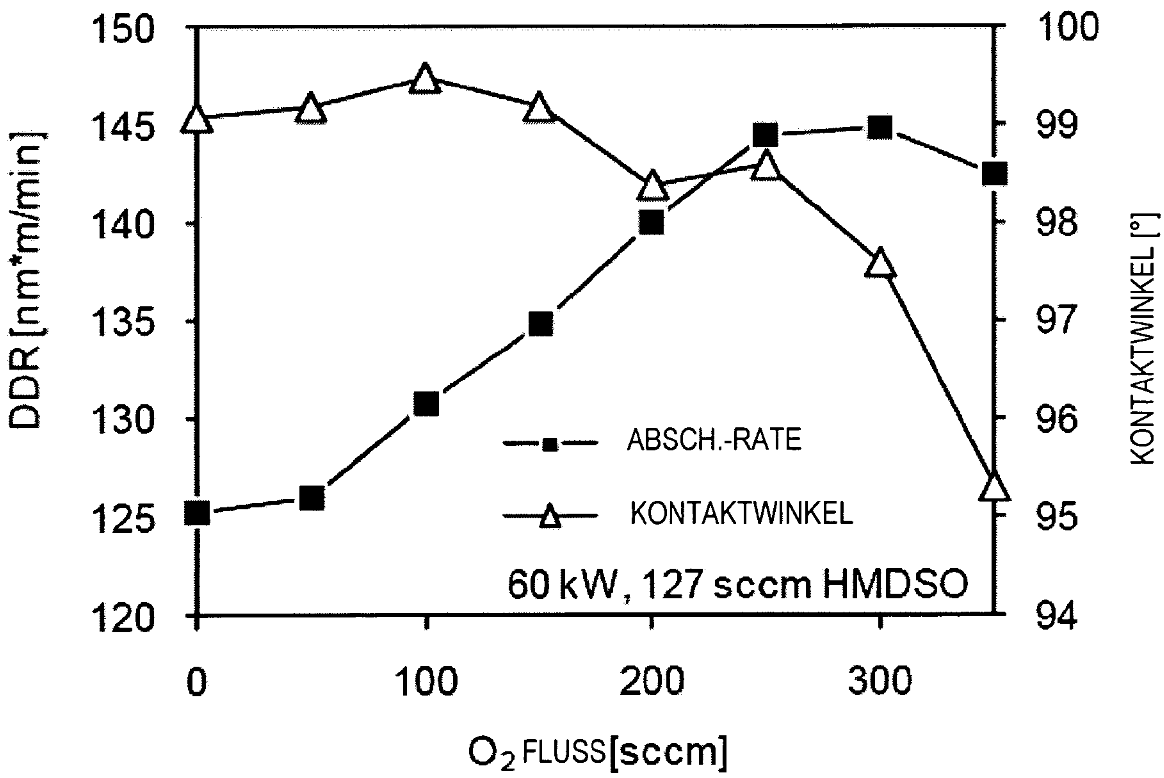
150
145
140
135
130
125
120
DDR [nm*m/min]
100
99
98
97
96
95
94
KONTAKTWINKEL [°]
ABSCH.-RATE
KONTAKTWINKEL
60 kW, 127 sccm HMDSO
0
100
200
300
O2 FLUSS[sccm]

FIG. 6

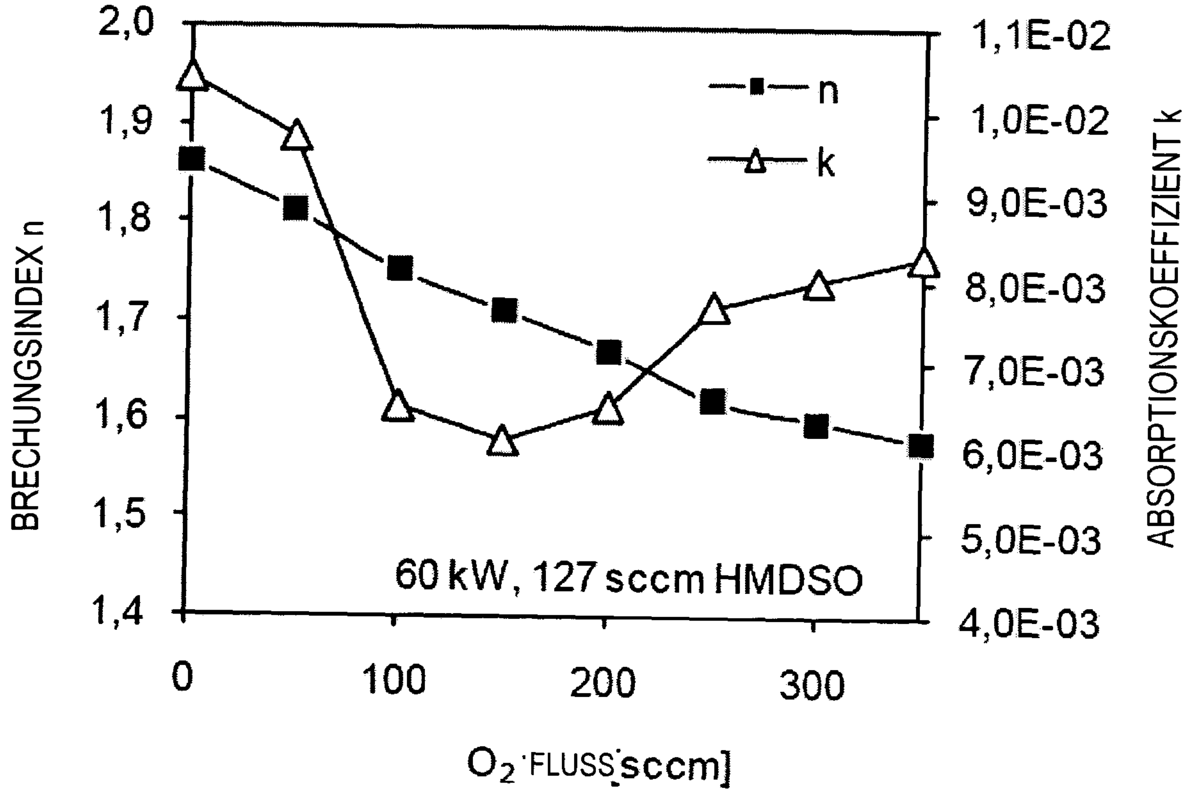
2,0
1,9
1,8
1,7
1,6
1,5
1,4
BRECHUNGSINDEX n
1,1E-02
1,0E-02
9,0E-03
8,0E-03
7,0E-03
6,0E-03
5,0E-03
4,0E-03
ABSORPTIONSKOEFFIZIENT k
n
k
60 kW, 127 sccm HMDSO
0
100
200
300
O2 FLUSS sccm]

FIG. 7

Europäisches Patentamt
European Patent Office
Office européen des brevets

# EUROPÄISCHER RECHERCHENBERICHT

Nummer der Anmeldung
EP 10 00 5436

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 6 848 797 B1 (GILLICH VOLKMAR [CH] ET AL) 1. Februar 2005 (2005-02-01)<br>* Abbildung 1 *<br>----- | 1-10 | INV.<br>F21V7/22<br>G02B1/10<br>G02B5/08<br>C03C17/36 |
| Y | US 5 298 587 A (HU ING-FENG [US] ET AL) 29. März 1994 (1994-03-29)<br>* das ganze Dokument *<br>----- | 1-10 | |
| Y | US 2002/154407 A1 (FRAZIER ROBERT L [US] FRAIZER ROBERT L [US]) 24. Oktober 2002 (2002-10-24)<br>* Absatz [0028]; Abbildungen 4,5 *<br>----- | 1-10 | |
| | | | RECHERCHIERTE SACHGEBIETE (IPC)<br>F21V<br>G02B<br>C03C |

Der vorliegende Recherchenbericht wurde für alle Patentansprüche erstellt

1

| Recherchenort | Abschlußdatum der Recherche | Prüfer |
|---|---|---|
| München | 24. August 2010 | Rödig, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.** EP 10 00 5436

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-08-2010

| Im Recherchenbericht angeführtes Patentdokument | Datum der Veröffentlichung | Mitglied(er) der Patentfamilie | Datum der Veröffentlichung |
|---|---|---|---|
| US 6848797 B1 | 01-02-2005 | AT 247797 T | 15-09-2003 |
| | | AU 1018599 A | 05-06-2000 |
| | | CA 2350510 A1 | 25-05-2000 |
| | | WO 0029784 A1 | 25-05-2000 |
| | | DE 59809364 D1 | 25-09-2003 |
| | | EP 1129318 A1 | 05-09-2001 |
| | | ES 2205565 T3 | 01-05-2004 |
| | | JP 2002530803 T | 17-09-2002 |
| US 5298587 A | 29-03-1994 | CA 2147486 A1 | 07-07-1994 |
| | | DE 69318424 D1 | 10-06-1998 |
| | | DE 69318424 T2 | 17-12-1998 |
| | | EP 0674722 A1 | 04-10-1995 |
| | | JP 8505186 T | 04-06-1996 |
| | | JP 3488458 B2 | 19-01-2004 |
| | | WO 9414998 A1 | 07-07-1994 |
| | | US 5320875 A | 14-06-1994 |
| US 2002154407 A1 | 24-10-2002 | CA 2294658 A1 | 08-08-2000 |
| | | DE 10005121 A1 | 05-10-2000 |
| | | JP 4401516 B2 | 20-01-2010 |
| | | JP 2000241611 A | 08-09-2000 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- BE 1007299 A
- EP 1129318 B1


### In der Beschreibung aufgeführte Nicht-Patentliteratur


- **M. Kakimoto ; M. Suzuki ; T. Konishi ; Y. Imai ; M. Iwamoto ; T. Hino.** Preparation of mono- and multi-layer films of aromatic polyimides using Langmuir-Blodgett technique. *Chemistry Letters,* 1986, vol. 15 (5), 823-826
- **Kubono, H. Higuchi ; S. Umemoto ; N. Okui.** Molecular orientation of alkyl-aromatic polyimide thin films prepared by vapour deposition polymerization. *Thin Solid Films,* 1993, vol. 229, 133-136
- **K. Ebihara ; T. Fujishima ; D. Kojyo ; M. Murata.** Silicon oxide film preparation by RF plasma-enhanced MOCVD using hexamethyldisiloxane. *Plasma Sources Science and Technology,* 1993, vol. 2, 14-17
- **D. Hegemann ; H. Brunner ; C. Oehr.** Improving the Adhesion of Siloxane-Based Plasma Coatings on Poly-mers with Defined Wetting Properties. *Proceedings of the 45th Technical Conference of the Society of Vacuum Coaters,* 2002, 174-178
- **C. Corbella ; I. Bialuch ; M. Kleinschmidt ; K. Bewilogua.** Modified DLC coatings prepared in a large-scale reactor by dual microwave/pulsed-DC plasma-activated chemical vapour deposition. *Thin Solid Films,* 2008, vol. 517 (3), 1125-1130
- **C. Vautrin-Ul ; F. Roux ; C. Boisse-Laporte ; J.L. Pastol ; A. Chausse.** Hexamethyldisiloxane (HMDSO)-plasma-polymerised coatings as primer for iron corrosion protection: influence of RF bias. *Journal of Materials Chemistry,* 2002, vol. 12 (8), 2318-2324
- **Pfuch, A. Heft ; R. Weidl ; K. Lang.** Characterization of SiO2 thin films prepared by plasma-activated chemical vapour deposition. *Surface and Coatings Technology,* 2006, vol. 201, 189-196
- **S. Sahli ; Y. Segui ; S. Ramdani ; Z. Takkouk.** R.f. plasma deposition from hexamethyldisiloxane-oxygen mixtures. *Thin Solid Films,* 1994, vol. 250, 206-212
- **J. Fahlteich ; W. Schönberger ; B. Meyer ; M. Fahland ; N. Schiller.** Mechanical and barrier properties of thin oxide films on flexible polymer substrates. *Proceedings of the 51st Technical Conference of the Society of Vacuum Coaters,* 2008, 50-55
- **J. Fahlteich ; M. Fahland ; N. Schiller.** Permeation bar-rier properties of oxide layers on polymer film depo-sited by pulsed magnetron sputtering. *Proceedings of the 50th Technical Conference of the Society of Vacuum Coaters,* 2007, 723-727
- **Bieder, A. ; Gruniger, Ph. ; Rudolf von Rohr.** Deposition of SiOx diffusion barriers on flexible packaging materials by PECVD. *Surface and Coatings Technology,* 2005, vol. 200, 928-931
- **Grüniger, A. ; Bieder, A. ; Sonnenfeld, Ph. ; Rudolf von Rohr ; U. Müller ; R. Hauert.** Influence of film structure and composition on diffusion barrier performance of SiOx thin films deposited by PECVD. *Surface and Coatings Technology,* 2006, vol. 200 (14-15), 4564-4571
- **Charton, M. Fahland ; N. Schiller.** Plasma Enhanced CVD Process using a Dual Magnetron as Plas-ma Source. *Proceedings of the 48th Technical Conference of the Society of Vacuum Coaters,* 2005, 623-625
- LIQUI-FLOW ® Massedurchfluss- oder Druckmess- und - regelgerät für Gase und Flüssigkeiten. Benutzer-Handbuch. BRONKHORST HIGH-TECH B.V, 2007
- CEM Flüssigkeitsdosiersystem mit geregelter Verdampfung. Benutzer-Handbuch. BRONK-HORST HIGH-TECH B.V, 2007